# EUROPÄISCHE PATENTSCHRIFT

(11) **EP 0 775 381 B1**
(45) Veröffentlichungstag und Bekanntmachung des Hinweises auf die Patenterteilung: **03.06.1998**
(21) Anmeldenummer: 95926371.6
(22) Anmeldetag: 31.07.1995
(51) Int. Cl.: H02K 3/22

(54) **ANORDNUNG MIT EINER VIELZAHL VON ENTLANG EINER LÄNGSACHSE GESTRECKTEN UND ENTLANG EINER HOCHACHSE AUFEINANDER GESTAPELTEN LEITERSTÄBEN**
DEVICE WITH A MULTIPLICITY OF CONDUCTOR BARS RUNNING ALONG THE LONGITUDINAL AXIS OF THE DEVICE AND STACKED ALONG ITS VERTICAL AXIS
SYSTEME COMPORTANT PLUSIEURS BARRES CONDUCTRICES S'ETENDANT LE LONG D'UN AXE LONGITUDINAL ET EMPILEES LE LONG D'UN AXE VERTICAL

(30) Priorität: 11.08.1994 DE 4428370
(43) Veröffentlichungstag der Anmeldung: 28.05.1997
(73) Patentinhaber: SIEMENS AKTIENGESELLSCHAFT, 80333 München (DE)
(72) Erfinder: BOMBA, Ralf, D-45659 Recklinghausen (DE); WESTENDORF, Wilhelm, D-45473 Mülheim/Ruhr (DE)
(86) Internationale Anmeldenummer: DE9500992
(87) Internationale Veröffentlichungsnummer: WO9605645

(56) Entgegenhaltungen:
- FR-A- 2 109 936
- US-A- 2 833 944
- US-A- 2 864 014
- US-A- 4 709 177

## Beschreibung

Die Erfindung betrifft eine Anordnung mit einer Vielzahl von entlang einer Längsachse gestreckten und entlang einer Hochachse aufeinander gestapelten Leiterstäben, deren jeder vier parallel zur Längsachse ausgerichtete und paarweise in Richtung einer zur Längsachse und zur Hochachse senkrechten Querachse nebeneinanderliegende sowie paarweise entlang der Längsachse hintereinanderliegende Kühlkanäle aufweist, deren jeder von einer zugehörigen Mündung in der Nähe eines Endes der Anordnung in eine von zwei bezüglich der Längsachse etwa mittig angeordneten Gasaustrittszone hineinreicht und dort in einen spitzwinklig zur Hochachse gerichteten Austrittskanal übergeht.

Eine solche Anordnung bildet insbesondere einen Bestandteil einer um eine zur Längsachse parallelen Drehachse rotierenden Rotorwicklung in einer elektrischen Maschine, wobei die Rotorwicklung eine Vielzahl solcher Anordnungen aufweist, deren Leiterstäbe in geeigneter Weise untereinander verbunden sind. Üblicherweise ist die Rotorwicklung in einem bezüglich der Drehachse zylindrischen Rotorballen befestigt, welcher zusammen mit der Rotorwicklung den Rotor bildet und dessen mechanisch tragendes Teil darstellt, wobei jede Anordnung in einer zugehörigen Nut des Rotorballens liegt derart, daß die Enden aus dem Rotorballen hervorragen. Außerhalb des Rotorballens sind die Leiterstäbe untereinander verbunden, wobei die aus dem Rotorballen hervorragenden Teile der Anordnungen und die diese verbindenden Leiterbögen die sogenannten "Wickelköpfe" bilden.

Aus dem US-Patent 4,709,177 ist eine Rotorwicklung einer elektrischen Maschine bekannt, welche Rotorwicklung gekrümmte Leiterstäbe mit entlang dieser Leiterstäbe verlaufenden Kühlkanälen aufweist. Öffnungen dieser Kühlkanäle sind in unterschiedlichen Abständen von den jeweiligen Stabenden angeordnet, um an jedem Leiterstab ein gleichmäßiges Temperaturprofil zu erzielen. Solche Kühlkanäle können paarweise innerhalb eines Leiterstabs ausgebildet sein.

Ausführungsformen von Rotorwicklungen für elektrische Maschinen sowie Ausführungsformen für die eingangs genannte Anordnung gehen hervor aus dem Aufsatz "Läuferwicklungen für Turbogeneratoren und Induktionsmaschinen" von D. Lambrecht in dem Buch "Herstellung der Wicklungen elektrischer Maschinen", herausgegeben von H. Sequenz, Springer-Verlag, Wien und New York 1973, Seiten 169 bis 199. Sowohl verschiedene Ausführungsformen für die in der eingangs genannten Anordnung einsetzbaren Leiterstäbe mit Kühlkanälen, die paarweise nebeneinander liegen und zur Führung eines insbesondere gasförmigen Kühlmittels bestimmt sind, als auch Möglichkeiten zur Bildung einer Rotorwicklung aus solchen Leiterstäben sind eingehend erläutert - siehe Abbildungen 105, 113 und 118 zu Beispielen für solche Leiterstäbe sowie Beispielen für den Einbau von Anordnungen aus solchen Leiterstäben in Nuten, sowie Abbildung 129 zur Herstellung einer Rotorwicklung, indem Leiterstäbe, die jeweils entlang einer Längsachse ausgerichtet sind, untereinander verbunden werden mit um die Längsachse gebogenen und durch Hartlöten mit den Leiterstäben verbundenen Leiterbögen.

Weitere Hinweise, die sich auf eine Anordnung der eingangs genannten Art sowie den Einsatz einer solchen Anordnung in einem Rotor einer elektrischen Maschine beziehen, gehen hervor aus der EP 0 173 877 B1. Dieses Dokument bezieht sich auf die Ausgestaltung der Gasaustrittszonen und die räumliche Beziehung der einer solchen Anordnung zugehörigen zwei Gasaustrittszonen zueinander; diese Gasaustrittszonen sollen entlang der Längsachse der Anordnung derart gegeneinander versetzt sein, daß sie einander nirgends überlappen, d.h., daß sie, in Richtung der Querachse gesehen, nirgends nebeneinanderliegen.

Ein wichtiges Thema bei der Auslegung einer Anordnung der eingangs genannten Art als Bestandteil einer Rotorwicklung einer elektrischen Maschine ist die Verteilung der Temperatur, die sich während des Betriebs der Rotorwicklung, während also die Anordnung von elektrischem Strom und von Kühlmittel durchströmt wird, entlang der Längsachse einstellt. Von besonderer Bedeutung ist dabei, daß eine Temperaturverteilung mit entlang der Längsachse möglichst konstanter bzw., angesichts der Wärmeaufnahme möglichst gleichmäßig und allmählich ansteigender, Temperatur erreicht wird, da auf diese Weise die Belastbarkeit der Anordnung, welche bestimmt ist durch das Maximum der Temperatur entlang der Anordnung, am größten ist. Die maximale Belastbarkeit ist bestimmt durch das Maximum der Temperatur entlang der Anordnung, da dieses Maximum einen gewissen Grenzwert, welcher beispielsweise bestimmt sein kann als höchste zulässige Temperatur eines Isolierstoffes, der zwischen die Leiterstäbe eingefügt ist und/oder die Anordnung umhüllt, nicht überschreiten darf. Liegen sowohl dieser Grenzwert als auch die Abmessungen der Anordnung fest, so kann eine Steigerung der Belastbarkeit erreicht werden, indem sogenannte "heiße Stellen", also Stellen mit gegenüber ihrer Umgebung deutlich erhöhter Temperatur, vermieden werden, was gleichbedeutend ist mit einer über die Anordnung gleichmäßigen Erzeugung und Abführung von Wärme. Die besonders hohe Belastbarkeit einer solchen Anordnung ergibt sich daraus, daß im Betrieb ihre Temperatur derart gesteigert werden kann, daß der zulässige Grenzwert im Rahmen eines entlang der Anordnung gleichmäßigen Anstiegs, nicht nur an vereinzelten heißen Stellen, erreicht wird.

Aufgabe der Erfindung ist die Angabe einer Anordnung der eingangs genannten Art, die den soeben geschilderten Anforderungen in besonderer Weise gerecht wird.

Zur Lösung dieser Aufgabe wird eine Anordnung mit einer Vielzahl von entlang einer Längsachse gestreckten und entlang einer Hochachse aufeinandergestapelten Leiterstäben angegeben, deren jeder vier parallel zur Längsachse ausgerichtete und paarweise in Richtung einer zur Längsachse und zur Hochachse senkrechten Querachse nebeneinanderliegende sowie paarweise entlang der Längsachse hintereinander liegende Kühlkanäle aufweist, deren jeder von einer zugehörigen Mündung in der Nähe eines Endes der Anordnung in eine von zwei bezüglich der Längsachse etwa mittig angeordneten Gasaustrittszonen hineinreicht und dort in einen spitzwinklig zur Hochachse gerichteten Austrittskanal übergeht, wobei erfindungsgemäß bei jedem Leiterstab für jedes Paar nebeneinander liegender Kühlkanäle die Mündung des einen Kühlkanals unmittelbar an einem Ende liegt und die Mündung des anderen Kühlkanals von dem Ende beabstandet ist, sowie für jedes Paar hintereinanderliegender Kühlkanäle die Mündung des einen Kühlkanals unmittelbar an dem Ende liegt, zu dem er führt, und die Mündung des anderen Kühlkanals von dem Ende, zu dem er führt, beabstandet ist.

Die Erfindung beruht auf der Erkenntnis, daß bei gegebener und weitgehend gleichmäßiger Erzeugung von Wärme entlang der Anordnung, wie dies beim Betrieb im Rahmen einer Rotorwicklung der Fall ist, eine zur Erzielung einer gleichmäßigen Verteilung der Temperatur notwendige gleichmäßige Abfuhr von Wärme dadurch erreicht werden kann, daß die Abmessungen der Kühlkanäle aneinander angeglichen werden, wobei insbesondere unnötig lange Kühlkanäle vermieden werden. Dabei fließt ein, daß die Kühlung einer Rotorwicklung im Inneren des Rotorballens etwas anderen Voraussetzungen unterliegt als die Kühlung der Rotorwicklung außerhalb des Rotorballens, also in einem Wickelkopf. In einem Wickelkopf ist die Rotorwicklung bei weitem nicht so umschlossen wie in dem Rotorballen, so daß es möglich ist, zur Kühlung der Wicklung mit Kühlmittel, welches durch die Kühlkanäle fließt, Kompromisse zu schließen, die eine verbesserte Kühlung der Wicklung im Inneren des Rotorballens herbeiführen. Demgemäß reichen nicht alle Kühlkanäle in der erfindungsgemäßen Anordnung vollständig durch diese hindurch, sondern nur die Hälfte der Kühlkanäle beginnt tatsächlich an einer Mündung an einem Ende der Anordnung und die andere Hälfte der Kühlkanäle beginnt jeweils an einer Mündung, die von dem Ende, in dessen Nähe sie sich befindet, deutlich beabstandet ist. Ein hierbei entstehender Verlust an Kühlung im Bereich der Wickelköpfe ist tragbar, denn er kann ausgeglichen werden durch anderweitige Kühlmaßnahmen, die aus dem Stand der Technik an sich bekannt sind und an dieser Stelle keiner weiteren Erläuterung bedürfen; der wesentliche Vorteil liegt darin, daß überlange Kühlkanäle mit dementsprechend eingeschränktem hydraulischem Leitwert für das Kühlmittel vermieden werden.

Vorzugsweise sind bei jedem Paar hintereinanderliegender Kühlkanäle die Kühlkanäle etwa gleich lang, was unmittelbar bedeutet, daß die Leitwerte dieser Kühlkanäle, und damit die Leitwerte aller vier Kühlkanäle eines Leiterstabes, gleich sind. Eine besonders gleichmäßige Kühlung des Leiterstabes über alle vier Kühlkanäle ist damit sichergestellt und der Entstehung "heißer Stellen" besonders gut vorgebeugt.

Die Anordnung der Mündungen der Kühlkanäle im Sinne der Erfindung impliziert, daß die Gasaustrittszonen, in denen die Kühlkanäle durch Austrittskanäle aus der Anordnung herausführen, entlang der Längsachse gegeneinander versetzt sind. Vorzugsweise ist diese Versetzung jedoch nicht so weit getrieben, daß die Gasaustrittszonen nirgends nebeneinander liegen, sondern die Auslegung der Kühlkanäle ist derart, daß die Gasaustrittszonen bezüglich der Querachse noch teilweise, vorzugsweise über einen Abschnitt, der bis 25 %, vorzugsweise nur bis 15 %, beispielsweise um zwei von 14 Austrittskanälen pro Gasaustrittszone, der Länge einer Gasaustrittszone entspricht, nebeneinanderliegen.

Zur Bildung einer Rotorwicklung ist die Anordnung vorzugsweise in eine Nut eines Rotorballens eingelegt, wobei die Enden so weit aus dem Rotorballen hervorragen, daß alle Mündungen freiliegen. Diejenigen Mündungen, die nicht unmittelbar an einem jeweiligen Ende liegen, liegen dabei mit weiterem Vorzug unmittelbar an dem Rotorballen. Die Einbindung der erfindungsgemäßen Anordnung in eine Rotorwicklung erfolgt mit zusätzlichem Vorzug derart, daß ein Satz aus einer Vielzahl gleicher Anordnungen, deren jede in eine zugehörige Nut des Rotorballens eingelegt ist, vorgesehen wird, wobei an jedem Ende des Satzes, gegeben durch die entsprechenden Enden der den Satz bildenden Anordnungen, etwa kreisbogenförmig um die Längsachse gebogene Leiterbögen vorgesehen sind, deren jeder zwei Leiterstäbe, die zu voneinander verschiedenen Anordnungen gehören, miteinander verbindet. Die Leiterbögen sind mit weiterem Vorzug durch Hartlöten mit den Leiterstäben verbunden. Eine erfindungsgemäße Anordnung wird entsprechend den vorstehenden Ausführungen daher vorzugsweise unter Bildung sogenannter "rechteckiger Wickelköpfe" in eine Rotorwicklung einer elektrischen Großmaschine, insbesondere eines Turbogenerators, integriert. Ein rechteckiger Wickelkopf wird gebildet, indem Leiterstäbe, die entlang der Drehachse des herzustellenden Rotors ausgerichtet sind, mit Leiterbögen, die etwa kreisbogenförmig um die Drehachse gebogen sind, verbunden, insbesondere hartverlötet, werden. Diese Ausführungsform ist an sich bekannt, bisher wurde ihr jedoch vielfach eine Ausführung vorgezogen, bei der zur Bildung eines Wickelkopfes die entlang der Drehachse ausgerichteten Leiterstäbe entsprechend abgebogen wurden. Das Vorsehen eines rechteckigen Wickelkopfes im Rahmen der Erfindung hat allerdings den weiteren Vorzug, daß für die Kühlung der Leiterbögen gesondert und unabhängig von der Kühlung der Leiterstäbe Sorge getragen werden kann, was einen zusätzlichen Freiheitsgrad zur Auslegung der Rotorwicklung bietet.

Ausführungsbeispiele der Erfindung gehen aus der Zeichnung hervor. Diese ist zur Verdeutlichung spezifischer Merkmale der Erfindung teilweise schematisiert und/oder verzerrt ausgeführt; die Darstellungen sind nicht als maßstabsgerecht aufzufassen. Im einzelnen zeigen:
Fig. 1 eine Anordnung mit einer Vielzahl von Leiterstäben gemäß der Erfindung;
Fig. 2 einen Leiterstab aus Figur 1;
Fig. 3 einen Rotorballen mit erfindungsgemäßen Anordnungen.

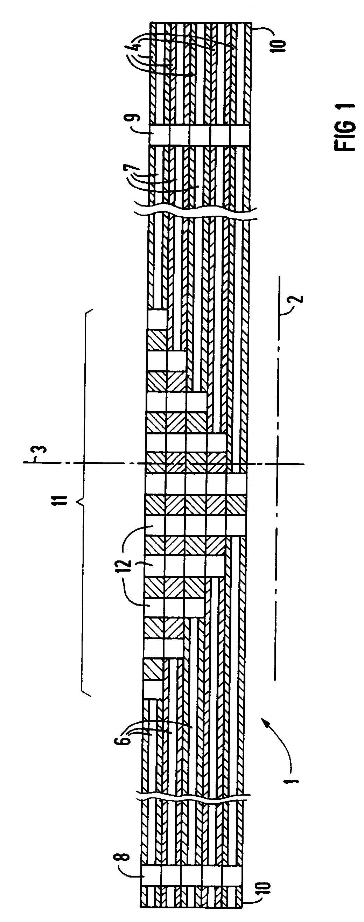

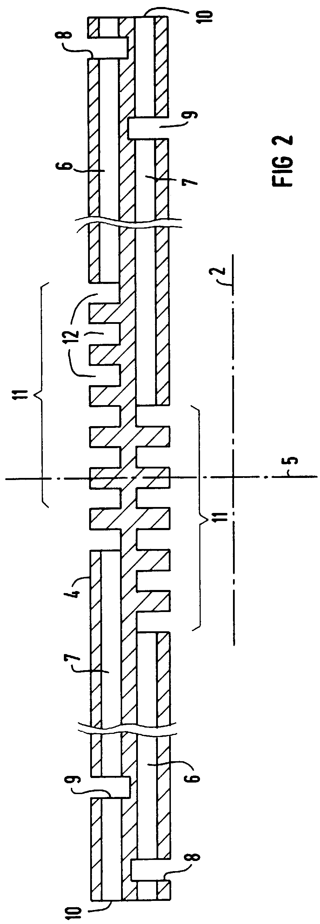

Die Figuren 1 und 2 sind als zusammengehörig zu betrachten und werden nunmehr gemeinsam erläutert. Fig. 1 zeigt einen Schnitt durch eine erfindungsgemäße Anordnung 1 parallel zu einer Längsachse 2 und einer Hochachse 3, entlang derer die Leiterstäbe 4 aufeinandergestapelt sind. Fig. 2 zeigt einen senkrecht zu dem Schnitt gemäß Fig. 1 gelegten Schnitt durch den mittleren Leiterstab 4 der aus Fig. 1 erkennbaren Anordnung 1, gelegt parallel zur Längsachse 2 und zur Querachse 5, welche sowohl senkrecht zur Längsachse 2 als auch senkrecht zur Hochachse 3 ist. In der Anordnung 1 hat jeder Leiterstab 4 vier Kühlkanäle 6, 7, davon zwei Kühlkanäle 6 mit Mündungen 8 in der Nähe eines Endes 10 und zwei Kühlkanäle 7 mit einer Mündung 9, die beabstandet von dem jeweiligen Ende 10 ist, auf welches der Kühlkanal 7 zuläuft. Ein Kühlkanal 6 und ein Kühlkanal 7 liegen bezüglich der Längsachse 2 jeweils hintereinander oder bezüglich der Querachse 5 jeweils nebeneinander. Alle Kühlkanäle 6, 7 enden in Gasaustrittszonen 11 im Bereich der durch die Hochachse 3 und die Querachse 5 angedeuteten Mitte der Anordnung 1, wo sie in parallel zur Hochachse 3 gerichtete Austrittskanäle 12 übergehen. Im Betrieb dringt Kühlmittel, insbesondere Kühlgas, durch die Mündungen 8 und 9 in die Kühlkanäle 6 bzw. 7 ein und gelangt darin zu den Austrittskanälen 12 in den Gasaustrittszonen 11. Entlang der Längsachse 2 gesehen, sind die Gasaustrittszonen 11 gegeneinander versetzt, wobei sie, wie gesehen entlang der Querachse 5, teilweise nebeneinanderliegen. Sowohl die die Mündungen 8 und 9 als auch die die Austrittskanäle 12 bildenden Ausnehmungen der Leiterstäbe 4 sind im vorliegenden Beispiel gebildet durch seitliche Einfräsungen; andere Ausführungsformen sind selbstverständlich ohne weiteres möglich.

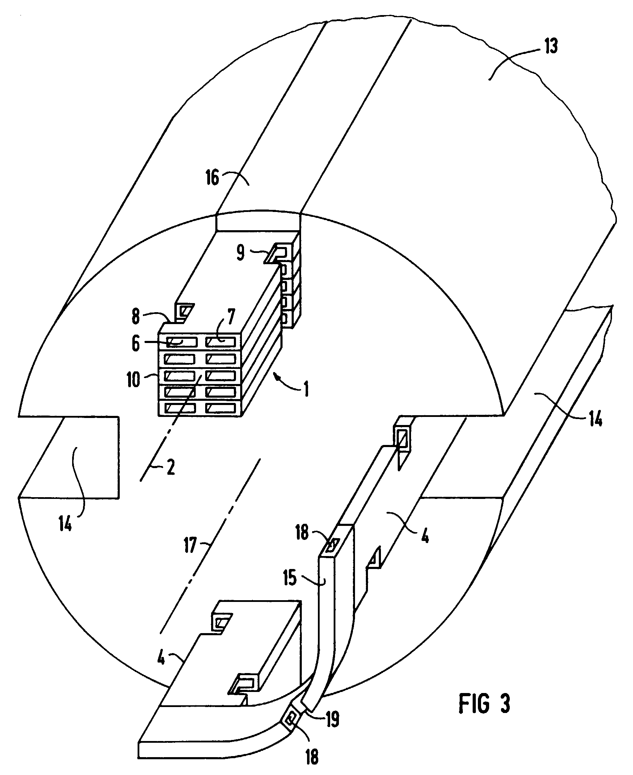

Fig. 3 zeigt in einer Schrägansicht relativ zur Achse 17, wie Anordnungen 1 von Leiterstäben 4 zur Bildung einer Rotorwicklung für eine elektrische Maschine in Nuten 14 eines Rotorballens 13 angeordnet werden. Die Leiterstäbe 4 ragen aus dem Rotorballen 13 hervor derart, daß alle Mündungen 8 und 9 freiliegen. Die von den Enden 10 beabstandeten Mündungen 9 befinden sich dabei unmittelbar an dem Rotorballen 13. Zur Bildung der Rotorwicklung, insbesondere des Wickelkopfes, wie er im unteren Teil der Figur 3 angedeutet ist, müssen die Leiterstäbe 4 untereinander verbunden werden, was mit Leiterbögen 15 geschieht, die etwa kreisbogenförmig um die zur Längsachse 2 parallele Drehachse 17 des Rotorballens 13 gebogen sind und jeweils zwei Leiterstäbe 4 miteinander verbinden. Diese Verbindung ist beispielsweise eine Hartlötverbindung. Kühlkanäle 18 zur Kühlung des Leiterbogens 15 sind angedeutet; sie beginnen an jeweils einem Leiterstab 4 und enden in einer mittig angeordneten Ausnehmung 19. Da die Leiterstäbe 4 beim Betrieb erheblichen Zentrifugalkräften ausgesetzt sind, müssen die Nuten 14 zuverlässig verschlossen werden. Dies ist schematisch angedeutet durch einen Nutverschluß 16, der in der Praxis selbstverständlich einen hochbelastbaren Kraftschluß mit dem Rotorballen 13 bilden muß, um die Zentrifugalkräfte aufzufangen.

Die erfindungsgemäße Anordnung mit einer Vielzahl von Leiterstäben zeichnet sich aus durch eine besonders gleichmäßige Abführung der im Betrieb, wenn die Leiterstäbe von elektrischem Strom durchflossen werden, entstehenden Wärme und eignen sich daher in besonderem Maße zur Einbindung in eine hoch belastbare Rotorwicklung für eine elektrische Maschine, insbesondere einen Turbogenerator.

## Patentansprüche

1. Anordnung (1) mit einer Vielzahl von entlang einer Längsachse (2) gestreckten und entlang einer Hochachse (3) aufeinandergestapelten Leiterstäben (4), deren jeder vier parallel zur Längsachse (2) ausgerichtete und paarweise in Richtung einer zur Längsachse (2) und zur Hochachse (3) senkrechten Querachse (5) nebeneinanderliegende sowie paarweise entlang der Längsachse (2) hintereinanderliegende Kühlkanäle (6, 7) aufweist, deren jeder von einer zugehörigen Mündung (8, 9) in der Nähe eines Endes (10) der Anordnung (1) in eine von zwei bezüglich der Längsachse (2) etwa mittig angeordneten Gasaustrittszonen (11) hineinreicht und dort in einen spitzwinklig zur Hochachse (3) gerichteten Austrittskanal (12) übergeht, **dadurch gekennzeichnet**, daß bei jedem Leiterstab (4) für jedes Paar nebeneinanderliegender Kühlkanäle (6, 7) die Mündung (8) des einen Kühlkanals (6) unmittelbar an einem Ende (10) liegt und die Mündung (9) des anderen Kühlkanals (7) von dem Ende (10) beabstandet ist, und daß für jedes Paar hintereinanderliegender Kühlkanäle (6, 7) die Mündung (8) des einen Kühlkanals (6) unmittelbar an dem Ende (10) liegt, zu dem er führt, und die Mündung (9) des anderen Kühlkanals (7) von dem Ende (10), zu dem er führt, beabstandet ist.

2. Anordnung (1) nach Anspruch 1, bei der bei jedem Paar hintereinanderliegender Kühlkanäle (6, 7) die Kühlkanäle (6, 7) etwa gleich lang sind.

3. Anordnung (1) nach Anspruch 1 oder 2, bei der die Gasaustrittszonen (11) entlang der Längsachse (2) derart gegeneinander versetzt sind, daß sie bezüglich der Querachse (5) teilweise nebeneinander liegen.

4. Anordnung (1) nach einem der vorhergehenden Ansprüche, welche in eine Nut (14) eines Rotorballens (13) eingelegt ist, wobei die Enden (10) so weit aus dem Rotorballen (13) hervorragen, daß alle Mündungen (8, 9) freiliegen.

5. Anordnung (1) nach Anspruch 4, bei der diejenigen Mündungen (9), die nicht unmittelbar an einem jeweiligen Ende (10) liegen, unmittelbar an dem Rotorballen (13) liegen.

6. Satz aus einer Vielzahl gleicher Anordnungen (1) nach Anspruch 4 oder 5, deren jede in eine zugehörige Nut (14) des Rotorballens (13) eingelegt ist, und wobei an jedem Ende (10) etwa kreisbogenförmig um die Längsachse (2) gebogene Leiterbögen (15) vorgesehen sind, deren jeder zwei Leiterstäbe (4), die zu voneinander verschiedenen Anordnungen (1) gehören, miteinander verbindet.

7. Satz nach Anspruch 6, bei dem die Leiterbögen (15) mit den Leiterstäben (4) hartverlötet sind.

8. Satz nach Anspruch 6 oder 7, welcher eine Rotorwicklung in einer elektrischen Großmaschine, insbesondere in einem Turbogenerator, ist.

## Claims

1. Arrangement (1) having a multiplicity of conductor bars (4) extending along a longitudinal axis (2) and stacked on one another along a vertical axis (3) of which each has four ventilating ducts (6, 7), which are aligned parallel to the longitudinal axis (2), are situated next to one another in pairs in the direction of a transverse axis (5) perpendicular to the longitudinal axis (2) and to the vertical axis (3) and situated one behind another in pairs along the longitudinal axis (2), and of which each reaches from an associated orifice (8, 9) in the vicinity of one end (10) of the arrangement (1) into one of two gas outlet zones (11) arranged approximately in the middle relative to the longitudinal axis (2), and merges there into an outlet duct (12) directed at an acute angle to the vertical axis (3), characterized in that in the case of each conductor bar (4) for each pair of ventilating ducts (6, 7) situated next to one another, the orifice (8) of one ventilating duct (6) is situated directly at one end (10) and the orifice (9) of the other ventilating duct (7) is spaced from that end (10), and in that for each pair of ventilating ducts (6, 7) situated one behind another the orifice (8) of one ventilating duct (6) is situated directly at the end (10) to which it leads, and the orifice (9) of the other ventilating duct (7) is spaced from that end (10) to which it leads.

2. Arrangement (1) according to Claim 1, in which for each pair of ventilating ducts (6, 7) situated one behind another the ventilating ducts (6, 7) are approximately of the same length.

3. Arrangement (1) according to Claim 1 or 2, in which the gas outlet zones (11) are mutually offset along the longitudinal axis (2) in such a way that they are partially situated next to one another relative to the transverse axis (5).

4. Arrangement (1) according to one of the preceding claims, which is inserted into a groove (14) of a rotor forging (13), the ends (10) projecting so far out of the rotor forging (13) that all the orifices (8, 9) are exposed.

5. Arrangement (1), according to Claim 4, in which those orifices (9) which are not situated directly at a respective end (10) are situated directly at the rotor forging (13).

6. Set composed of a multiplicity of identical arrangements (1) according to Claim 4 or 5, of which each is inserted into an associated groove (14) of the rotor forging (13), it being the case that there are provided at each end (10) conductor bows (15) which are bent approximately in the shape of a circular arc about the longitudinal axis (2) and of which each interconnects two conductor bars (4) which belong to mutually differing arrangements (1).

7. Set according to Claim 6, in which the conductor bows (15) are hard-soldered to the conductor bars (4).

8. Set according to Claim 6 or 7, which is a rotor winding in a large electric machine, in particular in a turbogenerator.

## Revendications

1. Dispositif (1) comportant une pluralité de barres conductrices (4) s'étendant le long d'un axe longitudinal (2) et empilées les unes sur les autres le long d'un axe vertical (3), qui comportent chacune quatre canaux de refroidissement (6, 7) parallèles à l'axe longitudinal (2) qui sont par paires situés côte à côte dans la direction d'un axe transversal (5) perpendiculaire à l'axe longitudinal (2) et à l'axe vertical (3) et sont par paires disposés l'un derrière l'autre le long de l'axe longitudinal (2), et chacun des canaux, à partir d'un orifice (8, 9) associé à proximité d'une extrémité (10) du dispositif (1), débouche dans l'une des deux zones de sortie de gaz (11) disposées sensiblement en position centrée par rapport à l'axe longitudinal (2) et se prolonge à ce niveau par un canal de sortie (12) faisant un angle aigu avec l'axe vertical (3), caractérisé en ce que dans chaque barre conductrice (4), l'orifice (8) de l'un (6) des canaux de refroidissement de chaque paire de canaux de refroidissement (6, 7) situés côte à côte se trouve juste à une extrémité, (10) et l'orifice (9) de l'autre (7) canal de refroidissement est à distance de l'extrémité (10) et que l'orifice (8) de l'un (6) des canaux de refroidissement de chaque paire de canaux de refroidissement (6, 7) situés l'un derrière l'autre se trouve juste à l'extrémité (10) vers laquelle il mène et l'orifice (9) de l'autre canal de refroidissement (7) étant à distance de l'extrémité (10) vers laquelle il mène.

2. Dispositif (1) selon la revendication 1, dans lequel dans chaque paire de canaux de refroidissement (6, 7) situés l'un derrière l'autre les canaux de refroidissement (6, 7) ont sensiblement la même longueur.

3. Dispositif (1) selon la revendication 1 ou 2, dans lequel les zones de sortie de gaz (11) sont mutuellement décalées le long de l'axe longitudinal (2) de telle manière qu'elles se trouvent en partie côte à côte par rapport à l'axe transversal (5).

4. Dispositif (1) selon l'une des revendications précédentes, lequel dispositif est inséré dans une encoche (14) d'un corps de rotor (13), les extrémités (10) dépassant du corps de rotor (13) de telle manière que tous les orifices (8, 9) sont dégagés.

5. Dispositif (1) selon la revendication 4 dans lequel les orifices (9) qui ne se situent pas juste à une extrémité (10) se trouvent juste sur le corps de rotor (13).

6. Jeu composé d'une pluralité de dispositifs (1) identiques selon la revendication 4 ou 5 qui sont chacun insérés dans une encoche (14) associée du corps de rotor (13), des arcs conducteurs (15) courbés sensiblement en arc de cercle autour de l'axe longitudinal (2) étant prévus à chaque extrémité (10) et reliant chacun entre elles deux barres conductrices (4) qui appartiennent à des dispositifs (1) différents entre eux.

7. Jeu selon la revendication 6 dans lequel les arcs conducteurs (15) sont reliés par brasage fort aux barres conductrices (4).

8. Jeu selon la revendication 6 ou 7 qui est un enroulement rotorique dans une grosse machine électrique, en particulier dans un turbo-alternateur.
